Europäisches Patentamt

European Patent Office

Office européen des brevets

(19)

(11) Numéro de publication: **0 235 058**
**B1**

(12) **FASCICULE DE BREVET EUROPEEN**

(45) Date de publication du fascicule du brevet:
**06.12.89**

(51) Int. Cl.⁴: **B24B 27/08**

(21) Numéro de dépôt: **87420044.7**

(22) Date de dépôt: **13.02.87**

(54) **Support de tronçonnage pour meuleuse électrique portative.**

(30) Priorité: **18.02.86 FR 8602354**

(43) Date de publication de la demande:
**02.09.87 Bulletin 87/36**

(45) Mention de la délivrance du brevet:
**06.12.89 Bulletin 89/49**

(84) Etats contractants désignés:
**AT BE CH DE ES GB GR IT LI LU NL SE**

(56) Documents cités:
**DE-A- 2 456 443**
**DE-A- 2 510 839**
**DE-A- 3 216 935**
**US-A- 2 009 859**
**US-A- 2 707 853**

(73) Titulaire: **ROUX, Pierre, 34, rue Garibaldi,**
**F-69006 Lyon(FR)**

(72) Inventeur: **ROUX, Pierre, 34, rue Garibaldi,**
**F-69006 Lyon(FR)**

(74) Mandataire: **Schmitt, John, Cabinet John Schmitt 9, rue**
**Pizay, F-69001 Lyon(FR)**

ACTORUM AG

## Description

La présente invention concerne un support universel de tronçonnage pour meuleuse électrique portative angulaire.

Les supports de tronçonnage connus comprennent généralement un socle supportant un étrier susceptible d'osciller autour d'un axe et retenant le nez d'une meuleuse électrique dont la manoeuvre oscillante est assurée au moyen d'une poignée. Le brevet FR-A 1 584 321 et son certificat d'addition 2 097 236 décrivent un tel support.

Pour des normes de sécurité rendues obligatoires, ces appareils doivent être équipés d'un certain nombre de dispositifs préventifs, tels que, notamment, d'un interrupteur qui ne commute le moteur de la meuleuse que lorsque la poignée est maintenue par l'utilisateur et qui interrompt le courant lorsque la poignée est lachée, de sorte que l'interrupteur doit être intégré à ladite poignée. Ce système non seulement complique la réalisation du support, mais surtout en grève le prix de revient.

Par le brevet DE-A 2 510 839, on connaît déjà un support de tronçonnage dans lequel l'oscillation de la meuleuse électrique est directement entraînée par la poignée de l'outil lui-même qui est équipée de son propre interrupteur.

Toutefois, ce support n'est pas apte à recevoir n'importe quelle meuleuse angulaire du commerce, car la forme de sa platine de fixation ne s'y prête pas. Par ailleurs, ce dispositif n'offre pas de sécurité de fonctionnement et d'utilisation.

Le support objet de l'invention permet de pallier ces inconvénients. Il comprend un bâti sur lequel est monté un palier supportant un axe permettant l'oscillation d'un bras formant un étrier entre les ailes duquel est fixé le nez de la meuleuse angulaire, l'étrier formant avec le bras qui l'accouple au palier un angle tel que la meuleuse qu'il retient est orientée verticalement, quoiqu'inclinée vers l'arrière de 30°, poignée dirigée vers le haut de manière à être appréhendée aisément par la main de l'utilisateur pour faire osciller l'outil vers le matériau à couper.

Ce support est équipé d'un moyen de sécurité qui bloque l'étrier oscillant retenant la meuleuse électrique en position haute de repos, de sorte que la manoeuvre de tronçonnage ne peut s'opérer que volontairement après que l'utilisateur ait déverrouillé l'étrier.

Ce support comporte aussi un moyen de réglage de la profondeur de coupe de la meule évitant que celle-ci ne franchisse l'épaisseur du socle et ne détériore l'établi sur lequel il est posé.

Par ailleurs, le palier d'oscillation de l'étrier support de la meuleuse est réglable en translation, parallèlement à un côté du bâti, pour positionner précisément la meule par rapport à son plan de coupe.

De toute manière, les détails de ce support de tronçon nage seront mieux compris par la description qui va suivre, se référant aux dessins annexés sur lesquels:

La figure 1 est une vue en élévation du support de tronçonnage dont il s'agit.

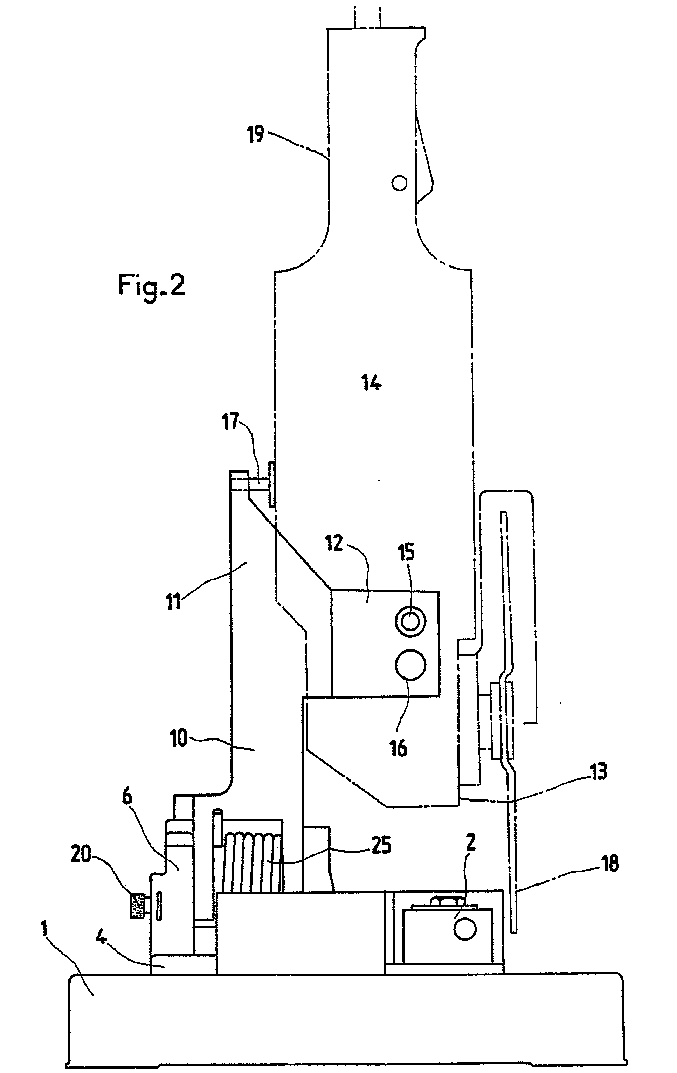

La figure 2 en est une vue de côté et,

La figure 3 en représente la vue en plan.

Sur les dessins, le repère 1 désigne le socle du support comportant, à la manière connue, un étau 2 de serrage du matériau à tronçonner. Il est creusé d'une fente 27 pour le passage de l'outil de tronçonnage et comporte des oreilles percées 26 pour la fixation du support sur un plan de traivail, notamment un établi.

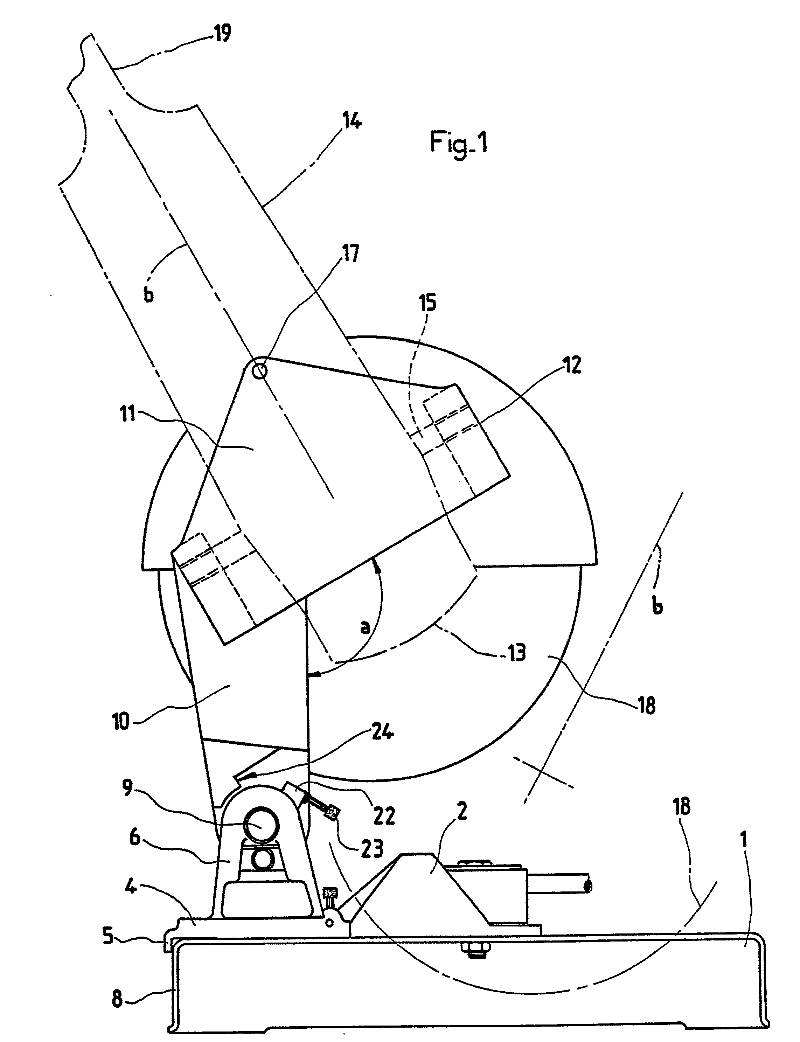

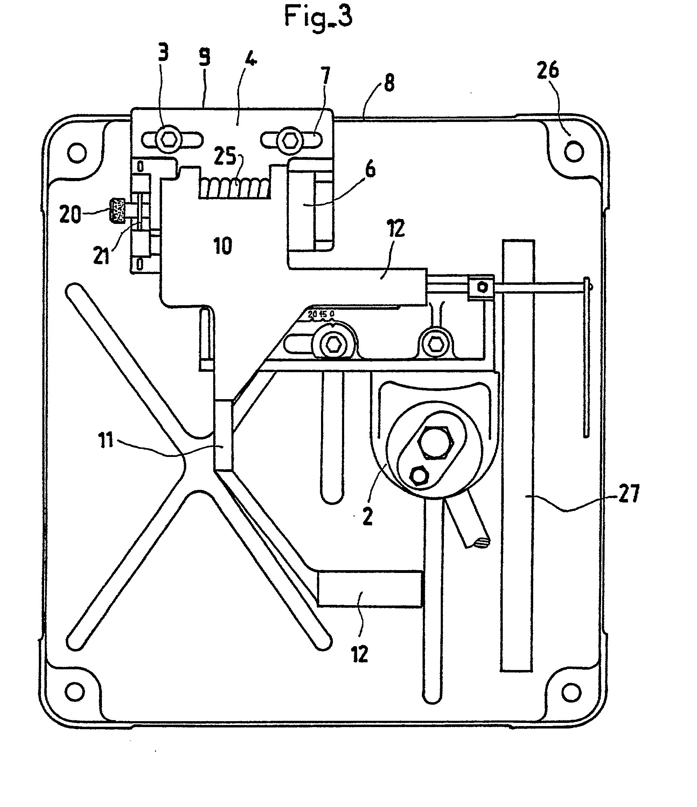

Sur la face supérieure du socle 1 est fixé, par trois vis 3, un palier 4 muni d'un rebord 5 et de deux ailes verticales 6. L'embase du palier est creusée de lumières oblongues 7 pour permettre un réglage en translation du palier 4 qui est guidé parallèlement au côté 8 du socle 1 contre lequel prend appui le rebord 5, comme l'illustrent les figures 1 et 3.

Les deux ailes 6 du paliere 4 supportent les extrémités d'un axe d'articulation 9 d'un bras 10 oscillant, se prolongeant par un étrier 11 avec lequel il forme un angel $\underline{a}$ de 120°.

C'est entre les deux ailes 12 de l'étrier 11 qu'est fixé le nez 13 d'une meuleuse électrique portative 14, prisonnier entre deux vis 15 prenant chacune écrou dans l'un des deux orifices 16 pratiqués dans lesdites ailes 12. Le centrage du nez 13 de la meuleuse 14 s'opère au moyen de ces vis 15 qui permettent de positionner différents types de meuleuse.

La meuleuse prend appui par ailleurs contre deux butées réglables 17 qui prennent écrou dans des orifices pratiqués dans la joue de l'étrier 11. Ces butées permettent de régler la perpendicularité de la meule 18 en faisant pivoter angulairement la meuleuse 14 autour des vis 15 de fixation du nez 13.

Grâce à la forme et à la position de l'étrier 11 par rapport à son bras porteur 10, la meuleuse 14 est orientée verticalement poignée 19 dirigée vers le haut, son axe longitudinal $\underline{b}$ étant incliné vers l'arrière de 30° comme le montre la figure 1.

L'une des ailes 6 du palier 4 est équipée d'un ergot 20 de verrouillage poussé par un ressort à lame 21 dans un orifice pratiqué dans l'une des faces latérales du bras oscillant 10. Dans la position haute de repos, le bras 10 et son étrier 11 et, par là, la meuleuse 14 sont bloqués. Il suffit de tirer sur la tête moletée de l'ergot 20, à l'encontre du ressort 21, pour le dégager, libérer le bras oscillant 10 et permettre la manœuvre de tronçonnage de la meuleuse 14 (figures 1 et 3).

Dans un bossage 22 de l'une des ailes 6 du palier 4, prend écrou une vis 23 jouant le rôle de butée du bras oscillant 10 et de son étrier 11 porte-moleuse. A cet effet, l'une des faces latérales dudit bras 10 est découpée d'un méplat 24 qui, en position basse, prend appui contre l'extrémité de la butée 21. Le réglage de cette butée permet de faire varier la profondeur de coupe de la meule 18, comme l'illustre le figure 1.

Le rappel de la meuleuse en position haute de repos est réalisé au moyen du ressort de torsion 25 logé autour de l'axe d'articulation 9 et à l'intérieur du bras 10, à la manière connue.

## Revendications

1. Support de tronçonnage pour meuleuse électrique portative angulaire comprenant un socle (1) sur lequel est fixé un palier (4) supportant un axe (9) d'oscillation d'un bras (10) formant un étrier (11) entre les ailes (12) duquel est centré le nez (13) de la meuleuse (14), caractérisé par le fait que l'étrier (11) forme avec le bras (10) qui l'accouple au palier (4) un angle de 120° de sorte que la meuleuse (14) qu'il retient est orientée verticalement poignée (19) dirigée vers le haut et inclinée vers l'arrière de 30° pour être directement appréhendée et manoeuvrée par l'utilisateur; que le bras (10) d'oscillation de la meuleuse est bloqué en position haute de repos par un moyen de verrouillage (20); que le bras (10) d'oscillation s'appuie, en position basse, contre une butée (23) limitant la profondeur de coupe de la meule (18); que le palier (4) est réglable en translation et guidé parallèlement à un côté du socle (1).

2. Support suivant la revendication 1, caractérisé par le fait que l'une des ailes (6) du palier (4) comporte un ergot (20) poussé par un ressort (21) et pénétrant dans un orifice pratiqué sur l'un des côtés du bras oscillant (10) et ainsi formant le moyen de verrouillage.

3. Support suivant la revendication 1, caractérisé par le fait que l'une des ailes (6) du palier (4) comporte un bossage (22) dans lequel prend écrou une vis (23) contre l'extrémité libre de laquelle prend appui un méplat (24) découpant l'un des côtés du bras oscillant (10) en position basse.

4. Support suivant la revendication 1, caractérisé par le fait que le palier (4) possède un rebord (5) s'étendant sur l'un des côtés de son embase et prenant appui contre l'une des faces verticales du socle (1).

**Patentansprüche**

1. Untersatz für elektrische tragbare Winkel-Trennscheiben, bestehend aus einem Sockel (1), auf dem ein Lager (4) zur Befestigung einer Schwingachse (9) für einen Arm (10) angebracht ist, welcher einen Bügel (11) bildet, zwischen dessen Flügeln (12) die Vorderseite (13) der Trennscheibe (14) zentriert ist, dadurch gekennzeichnet, daß der Bügel (11) mit dem Arm (10), der ihn mit dem Lager (4) verbindet, einen Winkel von 120° bildet, sodaß die von ihm gehaltene Trennscheibe (14) senkrecht mit dem Griff (19) nach oben und 30° nach hinten gerichtet ist, um so vom Bediener direkt erfaßt und bedient zu werden, daß der Schwingarm (10) in der oberen Ruhestellung durch eine Verriegelung (20) arretiert wird, daß der Schwingarm (20) in der unteren Stellung auf einem Anschlag (23) aufliegt, durch den die Trenntiefe der Trennscheibe (18) begrenzt wird und daß das Lager (4) parallel zu einer Seite des Sockels (1) in einer Führung verschoben und eingestellt werden kann.

2. Untersatz nach Patentanspruch 1, dadurch gekennzeichnet, daß einer der Flügel (6) des Lagers (4) einen durch eine Feder (21) angedrückten Sicherungsstift (20) besitzt, der in eine seitlich in dem Schwingarm (10) angebrachte Öffnung eindringt, wodurch die Verriegelung gewährleistet ist.

3. Untersatz nach Patentanspruch 1, dadurch gekennzeichnet, daß einer der Flügel (6) des Lagers (4) ein Gewindeauge (22) besitzt, in die eine Schraube (23) eingeführt ist, gegen deren freies Ende in der unteren Arbeitsstellung eine auf der einen Seite des Schwingarms (10) eingeschnittene Abflachung (24) anstößt.

4. Untersatz nach Patentanspruch 1, dadurch gekennzeichnet, daß das Lager (4) über die gesamte Länge einer seiner Unterseiten eine Randleiste (5) besitzt, die an einer der senkrechten Seiten des Sockels (1) anliegt.

**Claims**

1. Cutting support for a portable angular electric grinder comprising a bed (1) on which is fixed a bearing (4) supporting an oscillating shaft (9) of an arm (10) forming a fork (11) between the branches of which the nose (13) of the grinder (14) is centred, characterized by the fact that the fork (11) forms with arm (10) which couples it to the bearing (4) an angle of 120° so that the grinder (14) which it retains is oriented vertically with the handle (198) directed upwards and slanted rearwards through 30° so as to be directly gripped and handled by the user; that the oscillating arm (10) of the grinder is locked in a top rest position by a locking means (20); that the oscillating arm (10) bears, in the low position, against a stop (23) limiting the cutting depth of the grinding wheel (18); that the bearing (4) is adjustable in translation and guided parallel to one side of the bed (1).

2. Support according to claim 1, characterized by the fact that one of the flanges (6) of the bearing (4) comprises a stud (20) urged by a spring (21) and penetrating into an orifice formed in one of the sides of the oscillating arm (10) and thus forming the locking means.

3. Support according to claim 1, characterized by the fact that one of the flanges (6) of the bearing (4) comprises a boss (22) in which a screw (23) is screwed against the free end of which bears a flat (24) cut out from one of the sides of the oscillating arm (10) in the low position.

4. Support according to claim 1, characterized by the fact that the bearing (4) has an edge (5) extending over one of the sides of its base and bearing against one of the vertical faces of the bed (1).

Fig.1

Fig.2

# Fig.3